**Europäisches Patentamt**

**European Patent Office**

**Office européen des brevets**

(11) Veröffentlichungsnummer: **0 274 663 B1**

(12) **EUROPÄISCHE PATENTSCHRIFT**

(45) Veröffentlichungstag der Patentschrift: **06.11.91**

(51) Int. Cl.⁵: **B23K 7/10**

(21) Anmeldenummer: **87118100.4**

(22) Anmeldetag: **08.12.87**

(54) Werkzeugmaschine, insbesondere Brennschneidmaschine.

(30) Priorität: **12.01.87 DE 3700643**

(43) Veröffentlichungstag der Anmeldung:
**20.07.88 Patentblatt 88/29**

(45) Bekanntmachung des Hinweises auf die
Patenterteilung:
**06.11.91 Patentblatt 91/45**

(84) Benannte Vertragsstaaten:
**FR GB IT**

(56) Entgegenhaltungen:
**AT-B- 323 520**

(73) Patentinhaber: **MESSER GRIESHEIM GMBH**
**Hanauer Landstrasse 330**
**W-6000 Frankfurt/Main(DE)**

(72) Erfinder: **Mehner, Götz**
**Wiesenstrasse 36**
**W-6108 Weiterstadt(DE)**
Erfinder: **Nicolai, Manfred, Dr.**
**Grubenstieg 8**
**CH-8200 Schaffhausen(CH)**

## Beschreibung

Die Erfindung betrifft eine Brennschneidmaschine oder einen Laser mit einem Werkzeug und einem bewegbaren Sensor.

Mit Brennschneidmaschinen oder Lasern zum Schneiden, Schweißen, Oberflächenbehandeln oder Bohren von Werkstoffen, denen eine Programmiereinheit zugeordnet ist, werden Werkzeuge und/oder Werkstücke entlang einer vorgegebenen Bahn geführt. Entstehen aufgrund der Wärmeeinbringung in das Werkstück Veränderungen der Werkstückhöhe durch Verzug oder weicht das programmierte Bauteil in der Höhe von dem zu bearbeitenden Bauteil ab, so werden diese Höhenveränderungen durch die Programmsteuerung nicht berücksichtigt. Eine fehlerhafte Werkstückbearbeitung ist die Folge.

Um eine gute Bearbeitungsqualität, insbesondere Schnittqualität bzw. fehlerfreie Schweißnähte zu erzielen, wird den Werkzeugen, wie Schweiß- oder Schneidbrenner, Markierbrenner, Körner, Laser-Bearbeitungskopf eine automatische Abstandsregelung zugeordnet, die mit einem Sensor arbeitet, dessen Fühlerelektrode in einem Bereich unterhalb des Werkzeuges angeordnet ist und/ oder das Werkzeug umgibt. Die Fühlerelektrode ist in der Regel als Fühlerring ausgebildet, der zentrisch um die Düse des Brenners bzw. des Laserkopfes angeordnet ist. Selbstverständlich sind andere Ausbildungen der Fühlerelektrode auch möglich.

Die bekannten Sensoren sind vorzugsweise mit dem Werkzeug über einen Halter verbunden. Muß von dem Bedienungsmann eine Düse an dem Brenner oder dem Laser-Bearbeitungskopf gewechselt werden, so muß zuerst der Sensor demontiert werden. Nach vollzogenem Düsenwechsel wird der Sensor wieder an dem Brenner bzw. Laser-Bearbeitungskopf befestigt und anschließend justiert.

Durch diese rein manuell ausgeführte Arbeitsfolge ergibt sich eine hohe Rüstzeit, die sich entsprechend der Anzahl der Einzelbrenner pro Brennschneidmaschine multipliziert. Fehljustierungen der Fühlerelektrode führen zu einer mangelhaften Bearbeitungsqualität.

Aus der AT-B-323 520 ist eine bewegbare Taststange bekannt, mit der beim Durchtrennen von Brammen die Anschneidkante des Werkstückes ermittelt werden kann. Um keine Beschädigung der Taststange während des Durchtrennvorganges zu erhalten, wird der Tasthebel von der Anschneidkante zurückbewegt und in seiner zurückgezogenen Stellung außerhalb des Werkstückbereiches gehalten.

Der Erfindung liegt die Aufgabe zugrunde, die Rüstzeiten beim Wechseln eines Werkzeuges oder eines Teiles des Werkzeuges zu verringern, wenn in einem Bereich unterhalb des Werkzeuges und/oder ein das Werkzeug umgebender Sensor angeordnet ist.

Diese Aufgabe wird erfindungsgemäß durch die kennzeichnenden Merkmale des Anspruches 1 gelöst.

Unter Werkzeugbereich soll dabei die Hüllfläche verstanden werden, die sich ergibt, wenn das Werkzeug oder ein Teil des Werkzeuges im wesentlichen senkrecht nach unten bewegt wird. Die kleinste horizontale Ausdehnung der Hüllfläche wird hierbei durch den größten Durchmesser des Werkzeuges bzw. des Teiles des Werkzeuges bestimmt, der ausgewechselt werden soll. Gemäß der Erfindung soll die horizontale Ausdehnung des Werkzeugbereiches mindestens dieser Hüllfläche entsprechen.

Vorteilhafte Weiterbildungen der Erfindung sind in den Unteransprüchen angegeben.

Die Erfindung ermöglicht es, im Bedarfsfall bei einem Düsenwechsel nunmehr bei allen Werkzeugen gleichzeitig oder bei jedem Werkzeug separat den das Werkzeug umgebenden und/oder unter dem Werkzeug angeordneten Sensor automatisch über Programmsteuerung oder über ein von dem Bedienungsmann zu betätigendes Schaltelement aus dem Werkzeugbereich zu bewegen. Das Werkzeug oder Teile des Werkzeuges können von der Brennschneidmaschine oder dem Laser gelöst und vorzugsweise nach unten herausgenommen werden. Nach erfolgtem Wechsel des Werkzeuges bzw. eines Teiles des Werkzeuges kann der Sensor automatisch in seine Ausgangslage zurückgeführt werden, wodurch sich fehlerbehaftete Justierarbeiten vermeiden lassen. Durch die Vorrichtung nach der Erfindung ergibt sich eine beträchtliche Zeitersparnis. Vorteilhaft ist zwischen dem Werkzeug und dem Sensor ein Kollisionsschutz angeordnet, durch den bei Berührung des Sensors und/oder der erfindungsgemäßen Vorrichtung mit einem Hindernis die Verbindung zwischen Werkzeug und Sensor oder Vorrichtung über nachgiebig miteinander verbundene Bauteile gelöst und schnell über bekannte Steuerungen weitere Bewegungen unterbunden werden.

Mehrere Ausführungsbeispiele der Erfindung sind in der Zeichnung dargestellt und werden im folgenden näher beschrieben.

Es zeigen:

Fig. 1     eine schematische Teilschnittdarstellung der Vorrichtung nach der Erfindung in Verbindung mit einem Schneidbrenner;

Fig. 2     einen Schnitt entlang der Trennungslinie A-A;

Fig. 3     eine Darstellung der am Außenmantel der Drehkulisse vorgesehenen Führung;

Fig. 4    eine gegenüber den Figuren 1 bis 3 abgewandelte Vorrichtung nach der Erfindung;

Fig. 5    die Form der Kulissenführung der Fig. 4;

Fig. 6    ein weiteres Ausführungsbeispiel der Vorrichtung nach der Erfindung;

Fig. 7    ein Schnitt entlang der Trennungslinie A-A der Fig. 6.

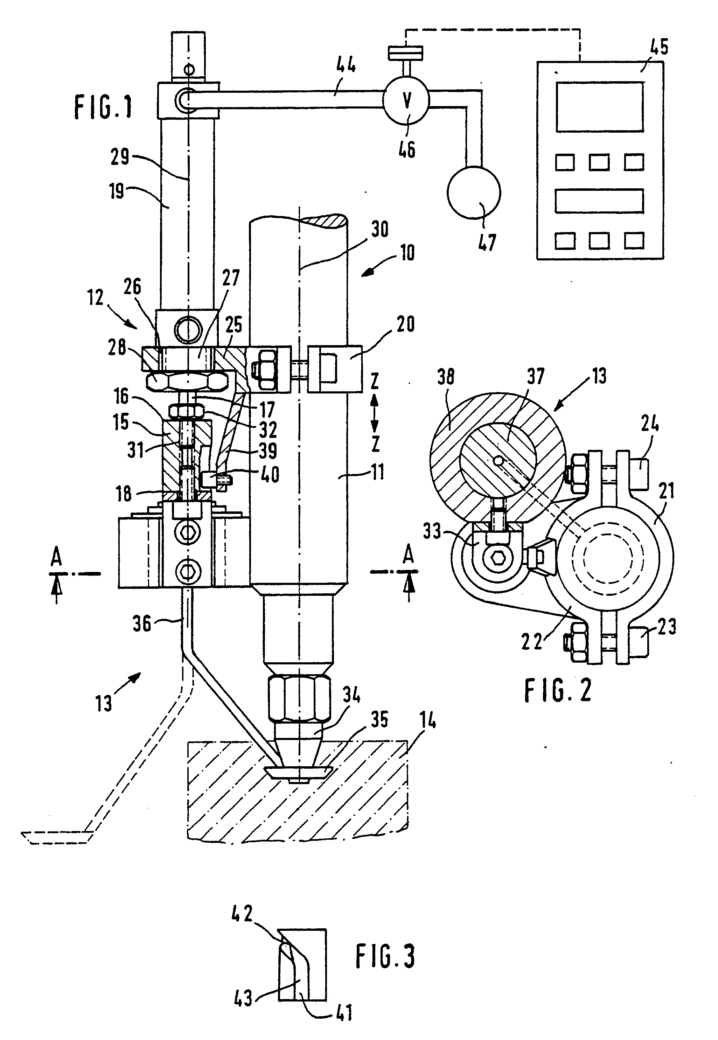

Fig. 1 zeigt ein als Schneidbrenner ausgebildetes Werkzeug 10, an dessen Führungsrohr 11 eine Vorrichtung 12 befestigt ist, mit der ein Sensor 13 (Fig. 2) aus einem schematisch durch Schraffur dargestellten Werkzeugbereich 14 bewegt werden kann. Der Schneidbrenner 10 ist an einem nicht näher dargestellten Brenneraggregat befestigt, welches Bestandteil einer Brennschneidmaschine ist. Die Brennschneidmaschine besteht im wesentlichen aus einem Laufwagen, der einen Querträger sowie Querwagen aufweist. Die Brenneraggregate mit den Schneidbrennern stehen mit einem Antriebswagen oder einem angetriebenen Band in Verbindung und sind quer zur Verfahrrichtung des Laufwagens entlang des Querträgers verfahrbar. Der Schneidbrenner 10 ist mittels eines Hubaggregates in Pfeilrichtung Z verstellbar.

Die Vorrichtung 12 besteht aus einer Drehkulisse 15, deren eines Ende 16 mit der Stange 17 eines Linearantriebes 19 vorzugsweise verschraubt ist und deren anderes Ende 18 mit dem Sensor 13 verbunden ist. Im folgenden wird ein Sensor 13 zur automatischen kapazitiven Abstandsregelung beschrieben, d. h. die Kapazität zwischen einer Fühlerelektrode 35 und der Werkstückoberfläche (bei metallischen Werkstücken) wird laufend gemessen und daraus das Signal für die Regelung des Abstandes abgeleitet. Der Linearantrieb 19 ist vorzugsweise als pneumatischer Hubzylinder mit drehbarer Stange 17 ausgebildet und über einen Halter 20 an dem Führungsrohr 11 des Schneidbrenners 10 geklemmt.

Selbstverständlich ist es auch möglich und liegt im Rahmen der Erfindung, die Vorrichtung 12 mit dem Sensor 13 an einem beliebig anderen Teil der Werkzeugmaschine, beispielsweise an dem Brenneraggregat einer Brennschneidmaschine zu befestigen.

Der Halter 20 besteht im wesentlichen aus zwei geteilten Scheiben 21, 22; das Aufklemmen erfolgt durch Schrauben 23, 24. Die Scheibe 22 weist einen auskragenden Teilbereich 25 mit einer Befestigungsöffnung 26 auf, durch die der Zylinderkopf 27 des pneumatischen Hubzylinders 19 hindurchgeführt und vorzugsweise mittels einer Kontermutter 28 befestigt wird. Selbstverständlich sind auch andere Befestigungsarten, beispielsweise mittels Flansch usw. möglich.

Die Mittelachse 29 des pneumatischen Hubzylinders 19 ist nach der Befestigung im Halter 20 im wesentlichen parallel zur Mittelachse 30 ausgerichtet. Das vordere Ende der Stange 17 ist mit einem Gewinde versehen, über das die Stange 17 mit der Drehkulisse 15 verbunden ist. Hierzu weist die zylinderförmig ausgebildete Drehkulisse eine durch ihre Mittelachse verlaufende Gewindebohrung auf, in die der Gewindeteil 31 des pneumatischen Hubzylinders 19 eingeschraubt ist. Mittels einer Kontermutter 32 wird die Verbindung zwischen Stange 17 und Drehkulisse 15 gesichert. Über einen Befestigungswinkel 33 (Fig. 2) wird der Sensor 13 mit der Drehkulisse 15 verbunden. Der Sensor 13 besteht im wesentlichen aus der die Düse 34 des Schneidbrenners umgebenden Fühlerelektrode 35, deren abgewinkelte Haltestange 36 in einem nur schematisch dargestellten Elektrodenhalter 37 befestigt ist. Der Elektrodenhalter 37 ist in einem ebenfalls nur schematisch dargestellten Gehäuse 38 angeordnet. Selbstverständlich ist es auch möglich, in diesem Gehäuse 38 zusätzlich die Regel- und Schwingkreise anzuordnen, wie dies insbesondere bei $CO_2$-Lasern zur Materialbearbeitung der Fall ist.

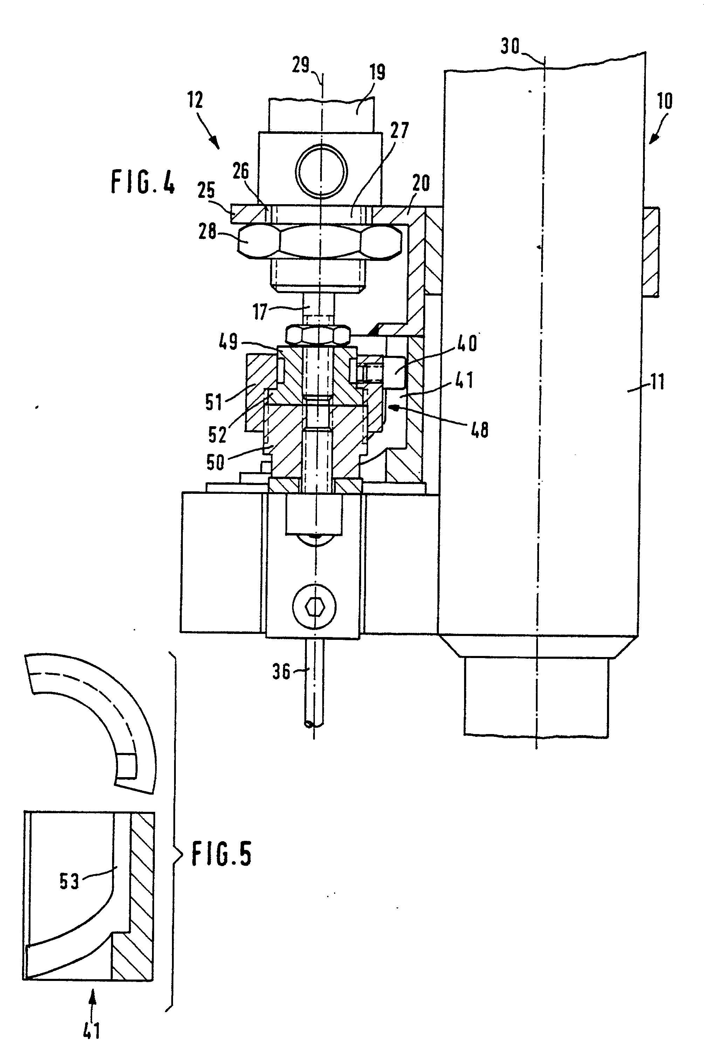

Der Halter 20 weist neben dem rechtwinklig zur Mittelachse 30 des Schneidbrenners auskragenden Teilbereich 25 einen zur Düse 34 des Schneidbrenners 10 weisenden Haltearm 39 auf, an bzw. in dem ein Kulissenstein 40 befestigt ist, der mit der Kulissenführung 41 (Fig. 3) in Verbindung steht. Vorzugsweise ist die Kulissenführung 41 in den Außenumfang der Drehkulisse 15 als Nut eingearbeitet. Selbstverständlich ist es auch möglich, die Kulissenführung 41 auf den Außenumfang der Drehkulisse 15 durch das Aufbringen von Führungsteilen zu bilden. Die Kulissenführung 41 weist einen zur Mittelachse des Schneidbrenners 10 parallen ersten Teilbereich 42 auf, welcher in einen schrauben- bzw. wendelartigen zweiten Teilbereich 43 übergeht.

Der pneumatische Hubzylinder 19 ist über eine nur schematisch dargestellte Steuerleitung mit einer Steuerung 45 verbunden, die den pneumatischen Hubzylinder 10 steuert, so daß dieser ein- bzw. ausfährt. Der Einfachheit halber ist der pneumatische Hubzylinder 10 nur mit einer Steuerleitung 44 verbunden und die Rückstellbewegung des pneumatischen Hubzylinders erfolgt mittels einer Rückstellfeder, nachdem durch ein Steuersignal der Steuerung 45 der obere Kolbenraum entlüftet ist. Vorzugsweise erfolgt jedoch die Ein- und Ausfahrbewegung mittels Druckluft.

Wird von der Steuerung 45 ein Steuersignal abgegeben, so öffnet sich das in der Steuerleitung 44 angeordnete Absperrventil 46 und der mit der Stange 17 verbundene Kolben des pneumatischen Hubzylinders 19 wird von der Druckluft beaufschlagt. Die Druckluftquelle ist mit 47 bezeichnet.

Die nicht verdrehgesicherte Stange 17 mit der daran befestigten Drehkulisse 15 verfährt vertikal nach unten, wobei über die Zwangsführung zwischen Kulissenführung 41 und Kullissenstein 40 zuerst ein linearer Hub erfolgt, der die ringförmige Fühlerelektrode 35 nach unten bewegt und danach eine schraubenartige Bewegung zu der Linearbewegung der Stange 17 stattfindet, die die Fühlerelektrode 35 um vorzugsweise 45° schwenkt. In der Fig. 1 ist die Fühlerelektrode 35 nach ihrer Ablaßschwenkbewegung gestrichelt dargestellt. Die Düse 34 des Schneidbrenners 10 kann nun, ohne daß eine Arbeit an der kapazitiven Abtastung erfolgen muß, vorgenommen werden. Nach erfolgtem Düsenwechsel wird die Rücksetzbewegung der Fühlerelektrode 35 in umgekehrter Reihenfolge ausgeführt, wobei vorzugsweise der nicht näher dargestellte mit der Stange 17 verbundene untere Kolben mit Druckluft beaufschlagt wird.

Im vorstehenden Ausführungsbeispiel wurde die Vorrichtung 12 in Verbindung mit einem Autogenschneidbrenner beschrieben, wobei die Vorrichtung 12 an dem Führungsrohr 11 des Autogenschneidbrenners befestigt ist. Selbstverständlich ist es auch möglich, die Vorrichtung 12 in Verbindung mit Pulvermarkierbrennern bzw. Körnern oder $CO_2$-Lasern einzusetzen. Auch liegt es im Rahmen der Erfindung, die Vorrichtung 12, beispielsweise an dem Brenneraggregat zu befestigen. Durch die Ablaß-Schwenk-Bewegung der Fühlerelektrode 35 wird es bei einer derartigen Befestigung vorteilhaft möglich, den gesamten Schneidbrenner 10 auszuwechseln, ohne daß der Sensor 13 demontiert und anschließend wieder montiert sowie justiert werden muß. Vorteilhaft ist zwischen dem Werkzeug und dem Sensor ein Kollisionsschutz angeordnet, durch den bei Berührung des Sensors und/oder der erfindungsgemäßen Vorrichtung mit einem Hindernis die Verbindung zwischen Werkzeug und Sensor oder Vorrichtung über nachgiebig miteinander verbundene Bauteile gelöst und schnell über bekannte Steuerungen weitere Bewegungen unterbunden werden.

In den Figuren 4 und 5 ist ein zweites Ausführungsbeispiel der Vorrichtung 12 in Verbindung mit einem Schneidbrenner 10 dargestellt, bei dem der pneumatische Hubzylinder 19 über den Halter 20 mit dem Führungsrohr 11 des Schneidbrenners 10 verbunden ist.

Die Vorrichtung 12 entspricht im wesentlichen der in den Figuren 1 bis 3 dargestellten Vorrichtung, wobei gleiche Bezugsziffern gleiche Bauteile bezeichnen.

Die Stange 17 des pneumatischen Hubzylinders 19 ist mit einem Drehlager 48 verbunden, das im wesentlichen aus einem Lagerteil 49, einem mit der Haltestange 36 der Fühlerelektrode verbundenen Gegenlager 50 und einer Klemmutter 51 besteht, welche über ein Gewinde mit dem Gegenlager verbunden ist. Die Klemmutter 51 weist einen Absatz 52 auf, der nach dem Aufschrauben der Klemmutter 51 auf das Gegenlager 50 auf einer entsprechenden Gegenfläche des Lagerteils 49 zur Anlage kommt und somit das Lagerteil 49 auf das Gegenlager 50 preßt. Am Außenumfang der Klemmutter ist ein Kulissenstein 40 angeordnet, welcher in der Kulissenführung 41 geführt ist. Die Kulissenführung ist auf einer Zylindermantelinnenfläche 53 (Fig. 3) angeordnet.

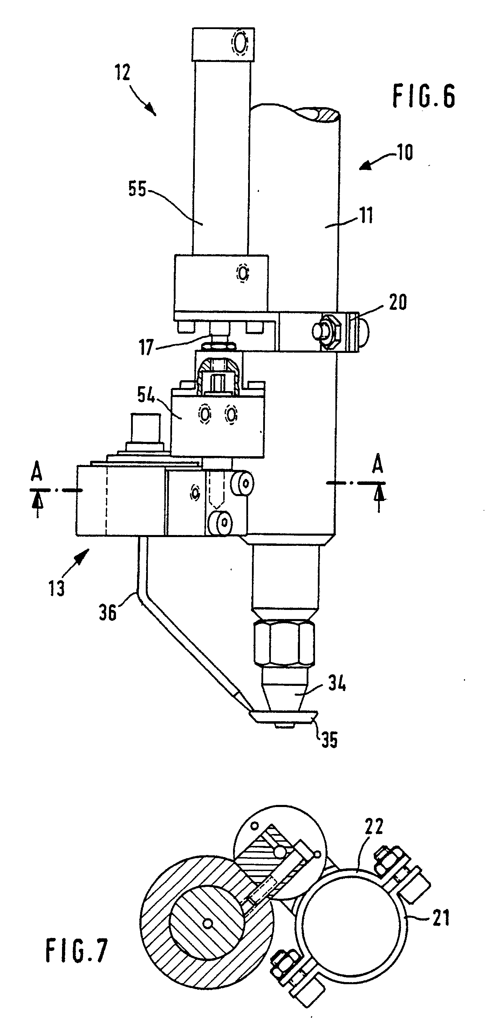

In den Fig. 6 bis 7 ist ein weiteres Ausführungsbeispiel der Vorrichtung 12 dargestellt, bei dem der pneumatische Hubzylinder 55 eine verdrehgesicherte Stange 17 aufweist, die mit einem pneumatischen Schwenkantrieb 54 verbunden ist und an dessen zur Düse weisenden Ende der Sensor 13 befestigt ist. Bei diesem Ausführungsbeispiel bewegt der pneumatische Hubzylinder 55 den Sensor 13 und den pneumatischen Schwenkantrieb vertikal nach unten so daß die Fühlerelektrode 35 von der Düse 34 des Schneidbrenners 10 frei ist. Anschließend wird die Fühlerelektrode 35 durch den Schwenkantrieb um 90° gedreht.

Gemäß einem weiteren nicht näher dargestellten Ausführungsbeispiel besteht die Vorrichtung 12 aus einem Schwenkspannzylinder, an dem der Sensor befestigt ist und dessen Stange in einem ersten Teilbereich geradlinig ausfährt und in einem zweiten Teilbereich ausschwenkt. Durch einen derartigen Schwenkspannzylinder wird eine besonders einfache Vorrichtung erreicht. Dadurch, daß bei einem derartigen Schwenkspannzylinder die Drehkulisse innerhalb des Zylinders angeordnet ist, wird eine besonders gegen Verschmutzung geschützte und betriebssichere Vorrichtung erreicht.

**Patentansprüche**

1. Brennschneidmaschine oder Laserbearbeitungsmaschine mit einem Werkzeug (10, 34) und einem bewegbaren Sensor (13), wobei der Sensor (13) als ein das Werkzeug (10, 34) umgebender und/oder in einem Bereich unterhalb des Werkzeuges (10, 34) angeordneter Fühlerring ausgebildet ist, welcher zur Abstandserfassung während der Bearbeitung über der Werkstückoberfläche angeordnet ist, dadurch gekennzeichnet daß das Werkzeug (10, 34) mit einer Vorrichtung (12) verbunden ist, die vor einem Wechsel des Werkzeuges (10) und/oder Werkzeugteile (34) den Fühlerring aus der Hüllfläche (14) bewegt, die sich beim Bewegen des Werkzeuges und/oder Werkzeugteiles nach unten ergibt.

2. Brennschneidmaschine oder Laserbearbeitungsmaschine nach Anspruch 1,

dadurch gekennzeichnet,
daß die Vorrichtung (12) mit einer Steuerung (45) verbunden ist, die Steuersignale zum Bewegen des Sensors (13) abgibt.

3. Brennschneidmaschine oder Laserbearbeitungsmaschine nach Anspruch 1 oder 2,
dadurch gekennzeichnet,
daß die Vorrichtung (12) eine Drehkulisse (15) mit einer am Außenumfang angeordneten Kulissenführung (41) aufweist, deren eines Ende (16) mit der Stange (17) eines Linearantriebes (19) und deren anderes Ende (18) mit dem Sensor (13) verbunden ist.

4. Brennschneidmaschine oder Laserbearbeitungsmaschine nach einem der Ansprüche 1 bis 3,
dadurch gekennzeichnet,
daß die Kulissenführung (41) einen zur Mittelachse (30) des Werkzeuges (10) parallelen ersten Teilbereich (42) aufweist, welcher in einen schraubenartigen zweiten Teilbereich (43) übergeht und die Drehkulisse (15) mit der Kulissenführung (41) entlang einem fest angeordneten Kulissenstein (40) verschiebbar ist.

5. Brennschneidmaschine oder Laserbearbeitungsmaschine nach einem der Ansprüche 1 bis 4,
dadurch gekennzeichnet,
daß der Linearantrieb (19) als Hubzylinder mit drehbarer Kolbenstange (17) ausgebildet ist, welcher über einen Halter (20) mit der Werkzeugmaschine verbunden ist.

6. Brennschneidmaschine oder Laserbearbeitungsmaschine nach einem der Ansprüche 1 bis 5,
dadurch gekennzeichnet,
daß das Werkzeug (10) als Schneid- oder Schweißbrenner ausgebildet ist und der Halter (20) an dem Führungsrohr (11) des Brenners befestigt ist.

7. Brennschneidmaschine oder Laserbearbeitungsmaschine nach einem der Ansprüche 1 bis 5,
dadurch gekennzeichnet,
daß das Werkzeug (10) als Laser-Bearbeitungskopf ausgebildet ist und der Halter (20) an dem laser-Bearbeitungskopf befestigt ist.

8. Brennschneidmaschine oder Laserbearbeitungsmaschine nach einem der Ansprüche 1 bis 7,
dadurch gekennzeichnet,
daß zwischen Werkzeug und dem Sensor ein Kollisionsschutz angeordnet ist.

9. Brennschneidmaschine oder Laserbearbeitungsmaschine Anspruch 1,
dadurch gekennzeichnet,
daß der Sensor (13) mit einem Schwenk-Spannzylinder verbunden ist, dessen Kolbenstange in einem ersten Teilbereich geradlinig ausfährt und in einem zweiten Teilbereich ausschwenkt.

10. Brennschneidmaschine oder Laserbearbeitungsmaschine nach Anspruch 1,
dadurch gekennzeichnet,
daß die Vorrichtung (12) einen Schwenkantrieb (54) aufweist, dessen eines Ende mit der geradlinig ausfahrenden Stange (17) eines verdrehgesicherten Hubzylinders (55) verbunden ist und dessen anderes Ende mit dem Sensor (13) verbunden ist.

**Claims**

1. Flame-cutting machine or laser processing machine, having a tool (10, 34) and a moveable sensor (13), the sensor (13) being designed as a Fühler ring which surrounds the tool (10, 34) and/or is arranged in an area below the tool (10, 34) and is arranged for detecting the distance above the workpiece surface during the processing operation, characterised in that the tool (10, 34) is connected to a device (12) which, before a change of tool (10) and/or tool parts (34) moves the Fühler ring out of the enveloping surface (14) which arises when the tool and/or tool part moves downwards.

2. Flame-cutting machine or laser processing machine according to Claim 1, characterised in that the device (12) is connected to a control means (45) which transmits control signals for moving the sensor (13).

3. Flame-cutting machine or laser processing machine according to Claim 1 or 2, characterised in that the device (12) has a rotary link (15) having a link guide (41) which is arranged on the outer periphery and whose one end (16) is connected to the rod (17) of a linear drive (19) and whose other end (18) is connected to the sensor (13).

4. Flame-cutting machine or laser processing machine according to one of Claims 1 to 3, characterised in that the link guide (41) has a first section (42) which is parallel to the centre axis (30) of the tool (10) and merges into a helicoidal second section (43), and the rotary link (15) having the link guide (41) can be displaced along a firmly arranged link block (40).

5. Flame-cutting machine or laser processing machine according to one of Claims 1 to 4, characterised in that the linear drive (19) is designed as a lifting cylinder having a rotatable piston rod (17), which linear drive (19) is connected to the machine tool via a holder (20).

6. Flame-cutting machine or laser processing machine according to one of Claims 1 to 5, characterised in that the tool (10) is designed as a cutting or welding torch, and the holder (20) is fastened to the guide tube (11) of the torch.

7. Flame-cutting machine or laser processing machine according to one of Claims 1 to 5, characterised in that the tool (10) is designed as a laser processing head, and the holder (20) is fastened to the laser processing head.

8. Flame-cutting machine or laser processing machine according to one of Claims 1 to 7, characterised in that collision protection is arranged between the tool and the sensor.

9. Flame-cutting machine or laser processing machine according to Claim 1, characterised in that the sensor (13) is connected to a swivel-clamping cylinder whose piston rod extends rectilinearly in a first section and swings out in a second section.

10. Flame-cutting machine or laser processing machine according to Claim 1, characterised in that the device (12) has a swivel drive (54) whose one end is connected to the rectilinearly extending rod (17) of a rotationally locked lifting cylinder (55) and whose other end is connected to the sensor (13).

**Revendications**

1. Machine d'oxycoupage ou machine d'usinage par laser comportant un outil (10, 34) et un capteur mobile (13),
le capteur (13) étant réalisé sous la forme d'une bague de détection entourant l'outil (10, 34) et/ou une zone en-dessous de l'outil (10, 34), et qui est prévue pour détecter la distance en cours d'usinage par rapport à la surface de la pièce, machine caractérisée en ce que l'outil (10, 34) est relié à un dispositif (12) qui dégage l'anneau de détection hors de la surface enveloppe (14) avant un changement d'outil (10) et/ou de partie d'outil (34), surface enveloppe qui correspond à la zone sous l'outil lors du mouvement de l'outil et/ou de la partie d'outil.

2. Machine d'oxycoupage ou machine d'usinage à laser selon la revendication 1, caractérisée en ce que le dispositif (12) est relié à un moyen de commande (45) qui émet les signaux de commande pour déplacer le capteur (13).

3. Machine d'oxycoupage ou machine d'usinage à laser selon la revendication 1 ou 2, caractérisée en ce que le dispositif (12) comporte une coulisse de rotation (15) avec une coulisse de guidage (41) prévue à sa périphérie et dont une extrémité (16) est reliée à la tige (17) d'un moyen d'entraînement linéaire (19) et dont l'autre extrémité (18) porte le capteur (13).

4. Machine d'oxycoupage ou machine d'usinage à laser selon l'une des revendications 1 à 3, caractérisée en ce que la coulisse de guidage (41) comporte une première partie (42) parallèle à l'axe (30) de l'outil (10) et qui rejoint une seconde partie (43) hélicoïdale et la coulisse de rotation (15) peut coulisser avec la coulisse de guidage (41) le long d'un galet à coulisse (40) fixe.

5. Machine d'oxycoupage ou machine d'usinage à laser selon l'une des revendications 1 à 4, caractérisée en ce que le moyen d'entraînement linéaire (19) est un vérin de levage à tige de piston (17) rotative qui est relié à la machine-outil par un support (20).

6. Machine d'oxycoupage ou machine d'usinage à laser selon l'une des revendications 1 à 5, caractérisée en ce que l'outil (10) est une torche de découpage ou de soudage et le support (20) est fixé au tube de guidage (11) de la torche.

7. Machine d'oxycoupage ou machine d'usinage à laser selon l'une des revendications 1 à 5, caractérisée en ce que l'outil (10) est une tête d'usinage à laser et le support (20) est fixé à la tête d'usinage à laser.

8. Machine d'oxycoupage ou machine d'usinage à laser selon l'une des revendications 1 à 7, caractérisée en ce qu'entre l'outil et le capteur il est prévu un moyen de protection anti-collision.

9. Machine d'oxycoupage ou machine d'usinage à laser selon la revendication 1, caractérisée en ce que le capteur (13) est relié à un cylindre de serrage basculant dont la tige de piston se déploie en ligne droite dans une première partie de trajectoire et bascule dans une seconde partie de trajectoire.

10. Machine d'oxycoupage ou machine d'usinage à laser selon la revendication 1, caractérisée en ce que le dispositif (12) comporte un moyen d'entraînement de basculement (54) dont une extrémité est reliée à la tige (17) qui se déploie en ligne droite et appartient à un vérin de levage (55) bloqué en rotation et dont l'autre extrémité est reliée au capteur (13).

FIG.1

FIG.2

FIG.3

FIG. 4

FIG. 5

FIG.6

FIG.7